(19) Europäisches Patentamt
European Patent Office
Office européen des brevets

(11) EP 1 720 934 B2

(12) # NEUE EUROPÄISCHE PATENTSCHRIFT

Nach dem Einspruchsverfahren

(45) Veröffentlichungstag und Bekanntmachung des Hinweises auf die Entscheidung über den Einspruch:
**11.04.2018 Patentblatt 2018/15**

(45) Hinweis auf die Patenterteilung:
**20.04.2011 Patentblatt 2011/16**

(21) Anmeldenummer: **05715387.6**

(22) Anmeldetag: **18.02.2005**

(51) Int Cl.:
***C08J 3/24*** (2006.01) ***C08L 33/02*** (2006.01)

(86) Internationale Anmeldenummer:
**PCT/EP2005/001673**

(87) Internationale Veröffentlichungsnummer:
**WO 2005/080479 (01.09.2005 Gazette 2005/35)**

(54) **VERFAHREN ZUR NACHVERNETZUNG WASSERABSORBIERENDER POLYMERE**

METHOD FOR SECONDARY CROSSLINKING OF WATER-ABSORBENT POLYMERS

PROCEDE POUR LA POST-RETICULATION DE POLYMERES HYDROABSORBANTS

(84) Benannte Vertragsstaaten:
**AT BE BG CH CY CZ DE DK EE ES FI FR GB GR HU IE IS IT LI LT LU MC NL PL PT RO SE SI SK TR**

(30) Priorität: **24.02.2004 DE 102004009438**

(43) Veröffentlichungstag der Anmeldung:
**15.11.2006 Patentblatt 2006/46**

(73) Patentinhaber: **BASF SE**
**67056 Ludwigshafen am Rhein (DE)**

(72) Erfinder:
- **RIEGEL, Ulrich**
  **66849 Landstuhl (DE)**
- **DANIEL, Thomas**
  **67165 Waldsee (DE)**
- **WEISMANTEL, Matthias**
  **63637 Jossgrund (DE)**
- **ELLIOTT, Mark**
  **67063 Ludwigshafen (DE)**
- **HERMELING, Dieter**
  **67459 Böhl-Iggelheim (DE)**

(74) Vertreter: **BASF IP Association**
**BASF SE**
**G-FLP-C006**
**67056 Ludwigshafen (DE)**

(56) Entgegenhaltungen:
**EP-A- 1 516 884**
**EP-A2- 1 191 051**
**WO-A1-00/22018**
**WO-A1-03/002623**
**WO-A1-2004/024816**
**DE-A1- 19 846 412**
**US-A- 5 599 335**
**US-B1- 6 620 889**

EP 1 720 934 B2

## Beschreibung

Die vorliegende Erfindung betrifft ein Verfahren zur Nachvernetzung wasserabsorbierender Polymere.

Unter Nachvernetzung wird die Gel- bzw. Nachvernetzung von wasserabsorbierenden Hydrogelen verstanden.

Hydrophile, hochquellfähige Hydrogele sind insbesondere Polymere aus (co)polymerisierten hydrophilen Monomeren, Pfropf(co)polymere von einem oder mehreren hydrophilen Monomeren auf einer geeigneten Pfropfgrundlage, vernetzte Cellulose- oder Stärkeether, vernetzte Carboxymethylcellulose, teilweise vernetztes Polyalkylenoxid oder in wässrigen Flüssigkeiten quellbare Naturprodukte, wie beispielsweise Guarderivate. Solche Hydrogele werden als wässrige Lösungen absorbierende Produkte zur Herstellung von Windeln, Tampons, Damenbinden und anderen Hygieneartikeln, aber auch als wasserzurückhaltende Mittel im landwirtschaftlichen Gartenbau verwendet.

Hydrophile, hochquellfähige Hydrogele sind Hydrogele mit einem CRC-Wert [g/g] von bevorzugt größer 15, insbesondere größer 20, besonders bevorzugt größer 25, insbesondere größer 30, insbesondere bevorzugt größer 35. Der CRC-Wert [g/g] der erfindungsgemäßen vernetzten quellbaren hydrogelbildenden Polymere kann nach den in der Beschreibung angegebenen Methoden gemessen werden.

Zur Verbesserung der Anwendungseigenschaften, wie beispielsweise Flüssigkeitsweiterleitung (SFC) in der Windel und Absorption unter Druck (AUL), werden hydrophile, hochquellfähige Hydrogele im allgemeinen oberflächen- oder gelnachvernetzt. Diese Nachvernetzung erfolgt bevorzugt in wässriger Gelphase oder als Nachvernetzung der gemahlenen und abgesiebten Polymerpartikel.

Dazu geeignete Vernetzer sind Verbindungen, die mindestens zwei Gruppen enthalten, die mit den Carboxylgruppen des hydrophilen Polymeren kovalente Bindungen bilden können. Geeignete Verbindungen sind beispielsweise Di- oder Polyglycidylverbindungen, wie Phosphonsäurediglycidylester, Alkoxysilylverbindungen, Polyaziridine, Polyamine oder Polyamidoamine, wobei die genannten Verbindungen auch in Mischungen untereinander verwendet werden können (siehe beispielsweise die EP-A-0 083 022, EP-A-0 543 303 und EP-A-0 530 438).

Als Vernetzer sind auch polyfunktionelle Alkohole bekannt. Beispielsweise lehren die US-4,666,983 sowie US-5,385,983 die Verwendung von hydrophilen Polyalkoholen bzw. die Verwendung von Polyhydroxytensiden. Die Reaktion wird hiernach bei hohen Temperaturen von 120 bis 250°C durchgeführt. Das Verfahren hat den Nachteil, daß die zur Vernetzung führende Veresterungsreaktion selbst bei diesen Temperaturen nur langsam abläuft.

Desweiteren sind als Vernetzer in DE-A-198 07 502 2-Oxazolidon und dessen Derivate, in WO-A-03/031482 Morpholin-2,3-dion und dessen Derivate, in DE-A-198 54 573 2-Oxotetrahydro-1,3-oxazin und dessen Derivate, in DE-A-198 54 574 N-Acyl-2-Oxazolidone und in DE-A-198 07 992 Bis- und Poly-2-oxazolidinone als geeignete Vernetzer beschrieben.

Weiterhin sind als Vernetzer ß-Hydroxyalkylamide in US-6,239,230 beschrieben. Auch diese sind gut geeignet für den Einsatz in Hygieneartikeln. Der Nachteil dieser Verbindungen liegt in den notwendigen relativ hohen Einsatzmengen und den damit zusammenhängenden Kosten.

EP-A-0 372 981 lehrt die gemeinsame Verwendung eines Nachvernetzers und eines polyvalenten Metallions. In den Beispielen wird eine Lösung aus Glycerin, Aluminiumsulfat und Wasser verwendet.

In EP-A-1 165 631, EP-A-1 169 372, WO-A-02/20068 und WO-A-02/22717 wird ebenfalls die gemeinsame Verwendung eines Nachvernetzers und eines polyvalenten Metallions beschrieben. Dabei wird die Verwendung einer Lösung und die alleinige Verwendung von Wasser als Lösungsmittel ausdrücklich bevorzugt.

DE-A-198 46 412 beschreibt die Herstellung eines sauren Hydrogels, das nach Neutralisation und Trocknung mit einem Nachvernetzer und einem polyvalenten Kation behandelt wird. In den Beispielen werden Nachvernetzer und polyvalentes Kation in einer gemeinsamen Lösung dosiert.

Nachteilig bei den obengenannten Verfahren ist die für eine hohen SFC-Wert des nachvernetzten Polymers notwendige hohe Einsatzmenge an Nachvernetzer und polyvalentem Kation, insbesondere die hohe Einsatzmenge an Nachvernetzer. Ein weiterer erheblicher Nachteil ist die hohe Verbackungsneigung des Grundpolymers beim Einmischen der den Nachvernetzer und das polyvalente Kation enthaltenden Lösung, welche relativ schnell zum Verstopfen des Mischers führen kann.

Keines der oben genannten Verfahren offenbart eine Lehre wie Produkte mit feiner Korngrößenverteilung und dennoch sehr hoher Permeabilität hergestellt werden können.

Solche feinkörnigen Superabsorber ermöglichen insbesondere die Herstellung sehr dünner Windeln ohne oder mit geringem Zellstoffanteil.

Es bestand daher die Aufgabe ein Verfahren zur Nachvernetzung bereitzustellen, dass die obengenannten Nachteile vermeidet. Insbesondere sollen die nachvernetzten wasserabsorbierenden Polymere eine hohe Flüssigkeitsweiterleitung (SFC) aufweisen. Das Verfahren soll mit einer geringen Aufwandmenge an Nachvernetzer und polyvalentem Kation auskommen. Insbesondere soll die Einsatzmenge des teuren Nachvernetzers niedrig sein.

Eine weitere Aufgabe bestand darin ein Verfahren bereitzustellen, bei dem die Verbackungsneigung des Grundpolymers während der Nachvernetzung vermindert ist, wobei unter Nachvernetzung sowohl das Einmischen der Lösung als auch die thermische Nachvernetzung zu verstehen ist.

Insbesondere war die Aufgabe zu lösen ein superabsorbierendes Polymer mit feiner Korngrößenverteilung, d.h. ohne grobe Bestandteile mit Partikelgrößen über 600 μm, und dennoch mit hoher Permeabilität und Absorptionskapazität zur Verfügung zu stellen.

Überraschenderweise wurde nun gefunden, dass die Aufgabe durch ein Verfahren gelöst wird, wobei ein auf Basis eines zu mindestens 50% neutralisierter Säuregruppen tragenden Monomeren hergestelltes Grundpolymer A mit einer ersten wässrigen Lösung B mindestens eines Oberflächennachvernetzers und einer zweiten wässrigen Lösung C mindestens eines polyvalenten Kations vermischt und thermisch behandelt wird, wobei die Lösungen B und C über getrennte Düsen zumindest teilweise gleichzeitig dosiert werden, wobei die Konzentration des mindestens einen Oberflächennachvernetzers auf dem Grundpolymer A von 0,01 bis 0,25 Gew.-% und die Konzentration des mindestens einen polyvalenten Kations auf dem Grundpolymer A von 0,001 bis 0,5 Gew.-% beträgt, jeweils bezogen auf das Grundpolymer A.

Wird beispielsweise die Dosierung von Lösung B zum Zeitpunkt $t_{B1}$ gestartet und zum Zeitpunkt $t_{B2}$ beendet sowie die Dosierung von Lösung C zum Zeitpunkt $t_{C1}$ gestartet und zum Zeitpunkt $t_{C2}$ beendet, so bedeutet teilweise gleichzeitig für den Fall $t_{B1} \leq t_{C1}$, dass $t_{C1}, < t_{B2}$ ist, und für den Fall $t_{B1} > t_{C1}$, dass $t_{B1} < t_{C2}$ ist, wobei die relative Überlappung der Dosierungen typischerweise mindestens 5%, vorzugsweise mindestens 25%, besonders bevorzugt mindestens 50%, ganz besonders bevorzugt mindestens 95%, beträgt. Die relative Überlappung der Dosierungen ist dabei der Quotient aus dem Zeitraum, während dem beide Lösungen B und C gleichzeitig dosiert werden, und dem Zeitraum, während dem mindestens eine Lösung dosiert wurde, angegeben in %.

Ist beispielsweise $t_{B1}$ =0 Minuten, $t_{B2}$ = 15 Minuten, $t_{C1}$ = 5 Minuten und $t_{C2}$ = 20 Minuten, so beträgt die relative Überlappung der Dosierungen (15-5)/(20-0) = 50%.

Dabei können die Dosierungen zeitlich versetzt erfolgen, gleichzeitig beginnen, gleichzeitig enden oder so erfolgen, dass die eine Dosierung in die andere zeitlich eingebettet ist.

Die Lösungen B und C werden gleichzeitig dosiert, wenn die Überlappung der Dosierungen mindestens 95% beträgt.

Das erfindungsgemäße Verfahren führt zu optimalen Ergebnissen, wenn die wässrigen Lösungen B und C gleichzeitig, aber unvermischt, auf das Grundpolymer A aufgebracht werden, d.h. die Partikel des Grundpolymers A werden möglichst zeitnah mit beiden Lösungen getrennt behandelt.

Die wässrige Lösung B kann neben dem mindestens einen Nachvernetzer typischerweise noch ein Cosolvens enthalten. Das Cosolvens selbst ist kein Nachvernetzer, d.h., die als Cosolvenz einsetzbaren Verbindungen können maximal eine Bindung zu maximal einer Carboxylgruppe ausbilden. Geeignete Cosolventien sind Alkohole, die keine Polyole sind $C_1$-$C_6$-Alkohole, wie Methanol, Ethanol, n-Propanol, Isopropanol, n-Butanol, sec-Butanol, tert-Butanol oder 2-Methyl-1-Propanol, Ketone, wie Aceton, oder Carbonsäureester, wie Essigsäureethylester. Bevorzugte Cosolventien sind $C_1$-$C_3$-Alkohole, insbesondere bevorzugt sind n-Propanol und Isopropanol.

Häufig beträgt die Konzentration des Cosolvens in der wässrigen Lösung B, bezogen auf die Lösung B, von 15 bis 50 Gew.-%, vorzugsweise von 15 bis 40 Gew.-%, besonders bevorzugt von 20 bis 35 Gew.-%. Bei Cosolventien, die mit Wasser nur begrenzt mischbar sind, wird man vorteilhaft die wässrige Lösung B so einstellen, dass nur eine Phase vorliegt, gegebenenfalls durch Erniedrigung der Konzentration des Cosolvens.

Vorzugsweise enthält die wässrige Lösung B mindestens zwei voneinander verschiedene Nachvernetzer. Besonders bevorzugt enthält die wässrige Lösung B mindestens einen Nachvernetzer, der kein Polyol ist, und mindestens ein Polyol.

Die im erfindungsgemäßen Verfahren einsetzbaren Nachvernetzer sind beispielsweise Ethylenglykoldiglycidylether, Diethylenglykoldiglycidylether, Polyethylenglykoldiglycidylether, Propylenglykoldiglycidylether, Dipropylenglykoldiglycidylether, Polypropylenglykoldiglycidylether, Glycerindiglycidylether, Polyglycerindiglycidylether, Epichlorhydrin, Etylendiamin, Ethylenglykol, Diethylenglykol, Triethylenglykol, Polyethylenglykol, Propylenglykol, Dipropylenglykol, Tripropylenglykol, Polypropylenglykol, Butylenglykol, 1,3-Propandiol, 1,4-Butandiol, Bisphenol A, Glycerin, Trimethylolpropan, Pentaerythrit, Sorbitol, Diethanolamin, Triethanolamin, Etylendiamin, Ethylencarbonat, Propylencarbonat, 2-Oxazolidone, wie 2-Oxazolidinon oder N-Hydroxyethyl-2-oxazolidinon, Morpholin-2,3-dione, wie N-2-Hydroxyethyl-morpholin-2,3-dion, N-Methyl-morpholin-2,3-dion, N-Ethyl-morpholin-2,3-dion und/oder N-tert.-Butyl-morpholin-2,3-dion, 2-Oxotetrahydro-1,3-oxazin, N-Acyl-2-oxazolidone, wie N-Acetyl-2-oxazolidon, bicyclische Amidacetale, wie 5-Methyl-1-aza-4,6-dioxa-bicyclo[3.3.0]octan, 1-Aza-4,6-dioxa-bicyclo[3.3.0]octan und/oder 5-Isopropyl-1-aza-4,6-dioxa-bicyclo [3.3.0]octan, und/oder Bis- und Poly-2-oxazolidinone. Vorzugsweise werden 2-Oxazolidone, wie 2-Oxazolidinon oder N-Hydroxyethyl-2-oxazolidinon, und Diole, wie Ethylenglykol und Propylenglykol, verwendet. Ganz besonders bevorzugt ist die Verwendung von 2-Oxazolidinon und Propylenglykol sowie N-Hydroxyethyl-2-oxazolidinon und Propylenglykol.

Die Konzentration des mindestens einen Nachvernetzers in der wässrigen Lösung B, bezogen auf die Lösung B, beträgt beispielsweise 1 bis 30 Gew.-%, vorzugsweise 3 bis 20 Gew.%, besonders bevorzugt 5 bis 15 Gew.%. Die Einsatzmenge bezogen auf Grundpolymer A beträgt 0,01 bis 0,25 Gew.%, vorzugsweise 0,05 bis 0,25 Gew.-%, besonders bevorzugt 0,1 bis 0,25 Gew-%.

Die im erfindungsgemäßen Verfahren einsetzbaren polyvalenten Kationen sind beispielsweise zweiwertige

Kationen, wie die Kationen von Zink, Magnesium, Kalzium und Strontium, dreiwertige Kationen, wie die Kationen von Aluminium, Eisen, Chrom, Seltenerden und Mangan, vierwertige Kationen, wie die Kationen von Titan und Zirkonium. Als Gegenion sind Chlorid, Bromid, Sulfat, Hydrogensulfat, Carbonat, Hydrogencarbonat, Nitrat, Phosphat, Hydrogenphosphat, Dihydrogenphosphat und Carboxylat, wie Acetat und Lactat, möglich. Aluminiumsulfat ist bevorzugt.

Die Wässrige Lösung C enthält üblicherweise kein Cosolvens.

Die Konzentration des mindestens einen polyvalenten Kations in der wässrigen Lösung C, bezogen auf die Lösung C, beträgt beispielsweise 0,1 bis 12 Gew.-%, vorzugsweise 0,5 bis 8 Gew.-%, besonders bevorzugt 1,5 bis 6 Gew.-%. Die Einsatzmenge bezogen auf Grundpolymer A beträgt 0,001 bis 0,5 Gew.-%, vorzugsweise 0,005 bis 0,2 Gew.-%, besonders bevorzugt 0,02 bis 0,1 Gew-%.

Das Verhältnis von Lösung B zu Lösung C beträgt typischerweise von 10:1 bis 1:10, vorzugsweise von 5:1 bis 1:5, besonders bevorzugt von 4:1 bis 1:1.

Die Gesamtmenge der Lösungen B und C bezogen auf Grundpolymer A beträgt üblicherweise zwischen 2,5 bis 6,5 Gew.-%, vorzugsweise zwischen 3 und 5 Gew.-%.

In einer bevorzugten Ausführungsform wird dem Grundpolymer A ein Tensid als Deagglomerationshilfsmittel, beispielsweise Sorbitanmonoester, wie Sorbitanmonococoat und Sorbitanmonolaurat, zugesetzt. Das Deagglomerationshilfsmittel kann getrennt dosiert oder einer der Lösungen B oder C zugesetzt werden. Vorzugsweise wird das Deagglomerationshilfsmittel einer der Lösungen B oder C zugesetzt, besonders bevorzugt der Lösung B.

Die Einsatzmenge des Deagglomerationshilfsmittels bezogen auf Grundpolymer A beträgt beispielsweise 0 bis 0,01 Gew.%, vorzugsweise 0 bis 0,005 Gew.%, besonders bevorzugt 0 bis 0,002 Gew-%. Vorzugsweise wird das Deagglomerationshilfsmittel so dosiert, dass die Oberflächenspannung eines wässrigen Extrakts des gequollenen Grundpolymers A und/oder des gequollenen wasserabsorbierenden Polymers bei 23°C mindestens 0,060 N/m, vorzugsweise mindestens 0,062 N/m, besonders bevorzugt mindestens 0,065 N/m, beträgt. Die Oberflächenspannung des wässrigen Extrakts beträgt vorteilhaft höchstens 0,072 N/m.

Die im erfindungsgemäßen Verfahren einsetzbaren Sprühdüsen unterliegen keiner Beschränkung. Derartigen Düsen kann die zu versprühende Flüssigkeit unter Druck zugeführt werden. Die Zerteilung der zu versprühenden Flüssigkeit kann dabei dadurch erfolgen, dass sie nach Erreichen einer bestimmten Mindestgeschwindigkeit in der Düsenbohrung entspannt wird. Ferner können für den erfindungsgemäßen Zweck auch Einstoffdüsen, wie beispielsweise Schlitzdüsen oder Drallkammern (Vollkegeldüsen) verwendet werden (beispielsweise von Düsen-Schlick GmbH, DE, oder von Spraying Systems Deutschland GmbH, DE).

Erfindungsgemäß bevorzugt sind Vollkegeldüsen mit einem Öffnungswinkel des Sprühkegels von 60 bis 180°, besonders bevorzugt 90 bis 120°. Der sich beim Versprühen einstellende mittlere Tropfendurchmesser ist erfindungsgemäß zweckmäßig <1000 μm, vorzugsweise <200 μm, bevorzugt <100 μm, sowie zweckmäßig >10 μm, vorzugsweise >20, μm, bevorzugt >50 μm. Der Durchsatz je Sprühdüse beträgt zweckmäßig 0,1 bis 10 $m^3/h$, häufig 0,5 bis 5 $m^3/h$. Die mittlere Fluglänge der Tropfen (bis sie auf das Substrat stossen) beträgt großtechnisch typisch 0,1 bis 2 m, häufig 0,2 bis 1 m, vorzugsweise 0,3 bis 0,5 m.

Bei zu großen Tropfen ist die Verteilung auf dem Grundpolymer A nicht optimal und die notwendige Einsatzmenge an Lösung B und C zur Erzielung einer bestimmen Wirkung ist unverhältnismäßig hoch. Bei zu kleinen Tropfen nimmt dagegen die Verbackungsneigung im Mischer zu, möglicherweise weil der Einfangquerschnitt über die Summe der Tropfen zunimmt und damit die Wahrscheinlichkeit steigt, dass sich Tropfen mit Lösung B und C bereits vor dem Substrat mischen.

Im Anschluß an das Aufsprühen wird das Polymerpulver thermisch getrocknet, wobei die Vernetzungsreaktion sowohl vor als auch während der Trocknung stattfinden kann. Bevorzugt ist das Aufsprühen einer Lösung des Vernetzers in Reaktionsmischern oder Misch- und Trocknungsanlagen wie beispielsweise Lödige-Mischer, BEPEX®-Mischer, NAUTA®-Mischer, SCHUGGL®-Mischer oder PROCESSALL®. Überdies können auch Wirbelschichttrockner eingesetzt werden. Besonders bevorzugt werden die Lösungen B und C in einem Hochgeschwindigkeitsmischer, beispielsweise vom Typ Schuggi-Flexomix® oder Turbolizer®, auf das Grundpolymer A aufgebracht und in einem Reaktionstrockner, beispielsweise vom Typ Nara-Paddle-Dryer® oder einem Scheibentrockner, thermisch nachbehandelt. Bevorzugt zur Nachvernetzung und Trocknung ist dabei der Temperaturbereich von 30 bis 200°C, insbesondere 100 bis 200°C, besonders bevorzugt 160 bis 190°C.

Die Trocknung kann im Mischer selbst erfolgen, durch Beheizung des Mantels oder Einblasen von Warmluft. Ebenso geeignet ist ein nachgeschalteter Trockner wie ein Hordentrockner, ein Drehrohrofen, oder eine beheizbare Schnecke. Es kann aber auch beispielsweise eine azeotrope Destillation als Trocknungsverfahren benutzt werden. Die bevorzugte Verweilzeit bei dieser Temperatur im Reaktionsmischer oder Trockner beträgt unter 120 Minuten, besonders bevorzugt unter 90 Minuten, am meisten bevorzugt unter 60 Minuten.

Die im erfindungsgemäßen Verfahren einzusetzenden hydrophilen, hochquellfähigen Hydrogele (Grundpolymer A) sind insbesondere Polymere aus vernetzten (co)polymerisierten hydrophilen Monomeren, Polyasparaginsäure, Pfropf(co)polymere von einem oder mehreren hydrophilen Monomeren auf eine geeignete Pfropfgrundlage, vernetzte Cellulose- oder Stärkeether oder in wässrigen Flüssigkeiten quellbare Naturprodukte, wie beispielsweise Guarderivate.

Bevorzugt handelt es sich bei dem zu vernetzenden Polymer um ein Polymer, das Struktureinheiten enthält, die sich von Acrylsäure oder deren Estern ableiten, oder die durch Pfropfcopolymerisation von Acrylsäure oder Acrylsäureestern auf eine wasserlösliche Polymermatrix erhalten wurden. Diese Hydrogele sind dem Fachmann bekannt und beispielsweise in der US-4 286 082, DE-C-27 06135, US-A-4 340 706, DE-C-37 13 601, DE-C-28 40 010, DE-A-43 44 548, DE-A-40 20 780, DE-A-40 15 085, DE-A-39 17 846, DE-A-38 07 289, DE-A-35 33 337, DE-A-35 03 458, DE-A-42 44 548, DE-A-42 19 607, DE-A-40 21 847, DE-A-38 31 261, DE-A-3511 086, DE-A-31 18 172, DE-A-30 28 043, DE-A-44 18 881, EP-A-0 801 483, EP-A-0 455 985, EP-A-0 467 073, EP-A-0 312 952, EP-A-0 205 874, EP-A-0 499 774, DE-A 26 12 846, DE-A--40 20 780, EP-A-0 205 674, US-A-5145 906, EP-A-0 530 438, EP-A-0 670 073, US-A-4 057 521, US-A-4 062 817, US-A-4 525 527, US-A-4 295 987, US-A-5 011 892, US-A-4 076 663 oder US-A-4 931 497 beschrieben.

Zur Herstellung dieser quellbaren hydrogelbildenden Polymere geeignete hydrophile Monomere sind beispielsweise polymerisationsfähige Säuren, wie Acrylsäure, Methacrylsäure, Vinylsulfonsäure, Vinylphosphonsäure, Maleinsäure einschließlich deren Anhydrid, Fumarsäure, Itaconsäure, 2-Acrylamido-2-methylpropansulfonsäure, 2-Acrylamido-2-methylpropanphosphonsäure sowie deren Amide, Hydroxyalkylester und aminogruppen- oder ammoniumgruppenhaltige Ester und Amide sowie die Alkalimetall- und/oder Ammoniumsalze der Säuregruppen enthaltenden Monomeren. Des weiteren eignen sich wasserlösliche N-Vinylamide wie N-Vinylformamid oder auch Diallyldimethyl-ammoniumchlorid. Bevorzugte hydrophile Monomere sind Verbindungen der allgemeinen Formel I

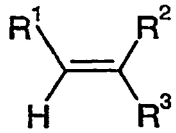

(I)

worin

$R^1$ Wasserstoff, $C_1$-$C_4$-Alkyl, wie beispielsweise Methyl oder Ethyl, oder Carboxyl,

$R^2$ -$COOR^4$, Hydroxysulfonyl oder Phosphonyl, eine mit einem $C_1$-$C_4$-Alkanol veresterte Phosphonylgruppe oder eine Gruppe der Formel II

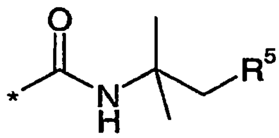

(II)

$R^3$ Wasserstoff, $C_1$-$C_4$-Alkyl, wie beispielsweise Methyl oder Ethyl,
$R^4$ Wasserstoff, $C_1$-$C_4$-Aminoalkyl, $C_1$-$C_4$-Hydroxyalkyl, Alkalimetall- oder Am- moniumion und
$R^5$ eine Sulfonylgruppe, eine Phosphonylgruppe oder eine Carboxylgruppe oder jeweils deren Alkalimetall- oder Ammoniumsalze, bedeuten.

Beispiele für $C_1$-$C_4$-Alkanole sind Methanol, Ethanol, n-Propanol, Isopropanol oder n-Butanol.

Bevorzugte hydrophile Monomere sind Säuregruppen tragende Monomere, vorzugsweise teilneutralisiert, d.h. 50 bis 100%, bevorzugt 60 bis 90%, besonders bevorzugt 70 bis 80%, der Säuregruppen sind neutralisiert.

Besonders bevorzugte hydrophile Monomere sind Acrylsäure und Methacrylsäure, sowie deren Alkalimetalloder Ammoniumsalze, beispielsweise Natriumacrylat, Kaliumacrylat oder Ammoniumacrylat.

Geeignete Pfropfgrundlagen für hydrophile Hydrogele, die durch Pfropfcopolymerisation olefinisch ungesättigter Säuren oder ihrer Alkalimetall- oder Ammoniumsalze erhältlich sind, können natürlichen oder synthetischen Ursprungs sein. Beispiele sind Stärke, Cellulose oder Cellulosederivate sowie andere Polysaccharide und Oligosaccharide, Polyalkylenoxide, insbesondere Polyethylenoxide und Polypropylenoxide, sowie hydrophile Polyester.

Geeignete Polyalkylenoxide haben beispielsweise die Formel III

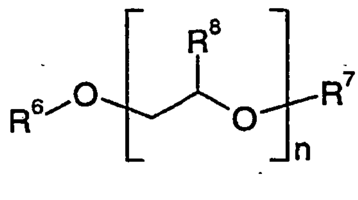

(III)

worin

R$^6$, R$^7$ unabhängig voneinander Wasserstoff, $C_1$-$C_{12}$-Alkyl, wie beispielsweise Methyl Ethyl, n-Propyl oder Isopropyl, $C_2$-$C_{12}$-Alkenyl, wie beispielsweise Ethenyl, n- Propenyl oder Isopropenyl, $C_7$-$C_{20}$-Aralkyl, wie beispielsweise Phenylmethyl, 1-Phenylethyl oder 2-Phenylethyl, oder Aryl, wie beispielsweise 2- Methylphenyl, 4-Methylphenyl oder 4-Ethylphenyl,

R$^8$ Wasserstoff oder Methyl und

n eine ganze Zahl von 1 bis 10000 bedeuten.

R$^6$ und R$^7$ bedeuten bevorzugt Wasserstoff, $C_1$-$C_4$-Alkyl, $C_2$-$C_6$-Alkenyl oder Phenyl.

Bevorzugte Hydrogele sind insbesondere Polyacrylate, Polymethacrylate sowie die in der US-4,931,497, US-5,011,892 und US-5,041,496 beschriebene Pfropfpolymere.

Die quellbaren hydrogelbildenden Polymere sind bevorzugt vernetzt, d.h. sie enthalten Verbindungen mit mindestens zwei Doppelbindungen, die in das Polymernetzwerk einpolymerisiert sind. Geeignete Vernetzer sind insbesondere N,N'-Methylenbisacrylamid und N,N'-Methylenbismethacrylamid, Ester ungesättigter Mono- oder Polycarbonsäuren von Polyolen, wie Diacrylat oder Triacrylat, beispielsweise Butandiol- oder Ethylenglykoldiacrylat bzw. -methacrylat sowie Trimethylolpropantriacrylat und Allylverbindungen wie Allyl(meth)acrylat, Triallylcyanurat, Maleinsäurediallylester, Polyallylester, Tetraallyloxyethan, Triallylamin, Tetraallylethylendiamin, Allylester der Phosphorsäure sowie Vinylphosphonsäurederivate, wie sie beispielsweise in EP-A-0 343 427 beschrieben sind. Weiterhin einsetzbar im erfindungsgemäßen Verfahren sind auch Hydrogele, die unter Verwendung von Polyallylethern als Vernetzer und durch saure Homopolymerisation von Acrylsäure hergestellt werden. Geeignete Vernetzer sind Pentaerythritoltri- und -tetraallylether, Polyethylenglykoldiallylether, Ethylenglykoldiallylether, Glyceroldi- und Triallylether, Polyallylether auf Basis Sorbitol, sowie ethoxilierte Varianten davon.

Die bevorzugten Herstellverfahren für das im erfindungsgemäßen Verfahren einsetzbare Grundpolymer werden in "Modern Superabsorbent Polymer Technology", F.L. Buchholz and A.T. Graham, Wiley-VCH, 1998, Seiten 77 bis 84 beschrieben. Besonders bevorzugt sind Grundpolymere, die im Kneter, wie beispielsweise in WO-A-01/38402 beschrieben, oder auf einem Bandreaktor, wie beispielsweise in EP-A-0 955 086 beschrieben, hergestellt werden.

Das wasserabsorbierende Polymer ist bevorzugt eine polymere Acrylsäure oder ein Polyacrylat. Die Herstellung dieses wasserabsorbierenden Polymeren kann nach einem aus der Literatur bekannten Verfahren erfolgen. Bevorzugt sind Polymere, die vernetzende Comonomere in Mengen von 0,001 bis 10 Mol-%, vorzugsweise 0,01 bis 1 Mol-% enthalten, ganz besonders bevorzugt sind jedoch Polymere, die durch radikalische Polymerisation erhalten wurden und bei denen ein mehrfunktioneller ethylenisch ungesättigter Radikalvernetzer verwendet wurde, der zusätzlich noch mindestens eine freie Hydroxylgruppe tragen kann (wie beispielsweise Pentaerythritoltriallylether, Trimethylolpropandiallylether, Glycerindiacrylat).

Die quellbaren hydrogelbildenden Polymere können durch an sich bekannte Polymerisationsverfahren hergestellt werden. Bevorzugt ist die Polymerisation in wässriger Lösung nach dem Verfahren der sogenannten Gelpolymerisation. Dabei werden beispielsweise 15 bis 50 gew.-%ige wässrige Lösungen eines oder mehrerer hydrophiler Monomere und gegebenenfalls einer geeigneten Pfropfgrundlage in Gegenwart eines Radikalinitiators, bevorzugt ohne mechanische Durchmischung unter Ausnutzung des Trommsdorff-Norrish-Effektes (Makromol. Chem. 1, 169 (1947)), polymerisiert. Die Polymerisationsreaktion kann im Temperaturbereich zwischen 0 und 150°C, vorzugsweise zwischen 10 und 100°C, sowohl bei Normaldruck als auch unter erhöhtem oder erniedrigtem Druck durchgeführt werden. Wie üblich kann die Polymerisation auch in einer Schutzgasatmosphäre, vorzugsweise unter Stickstoff und/oder Wasserdampf, ausgeführt werden. zur Auslösung der Polymerisation können energiereiche elektromagnetische Strahlen oder die üblichen chemischen Polymerisationsinitiatoren herangezogen werden, beispielsweise organische Peroxide, wie Benzoylperoxid, tert.-Butylhydroperoxid, Methylethylketonperoxid, Cumolhydroperoxid, Azoverbindungen wie Azodiisobutyronitril sowie anorganische Peroxoverbindungen wie $(NH_4)_2S_2O$ oder $K_2S_2O_8$ oder $H_2O_2$. Sie können gegebenenfalls in Kombination mit Reduktionsmitteln wie Natriumhydrogensulfit und Eisen(II)-sulfat oder Redoxsystemen, welche als reduzierende Komponente eine aliphatische und aromatische Sulfinsäure, wie Benzolsulfinsäure und Toluolsulfinsäure oder Derivate dieser Säuren enthalten, wie Mannichaddukte aus Sulfinsäuren, Aldehyden und Aminoverbindungen, wie sie in der DE-A-13 01 566 beschrieben sind, verwendet werden. Durch mehrstündiges Nachheizen der Polymergele im Temperaturbereich 50 bis 130°C, vorzugsweise 70 bis 100°C, können die Qualitätseigenschaften der Polymere noch verbessert werden.

Die erhaltenen Gele werden beispielsweise zu 0 bis 100 Mol-%, bevorzugt 5 und 90 Mol%, insbesondere zwischen 25 und 80 Mol-%, ganz besonders bevorzugt zwischen 30 und 55 Mol% und zwischen 70 und 75 Mol-%, bezogen auf eingesetztes Monomer neutralisiert, wobei die üblichen Neutralisationsmittel verwendet werden können,

bevorzugt Alkalimetallhydroxide oder -oxide, besonders bevorzugt jedoch Natriumhydroxid, Natriumcarbonat und Natriumhydrogencarbonat. Der pH-Wert des neutralisierten Grundpolymers beträgt üblicherweise zwischen 5 und 7,5, vorzugsweise zwischen 5,6 und 6,2.

Üblicherweise wird die Neutralisation durch Einmischung des Neutralisationsmittels als wässrige Lösung oder bevorzugt auch als Feststoff erreicht. Die Neutralisation wird vorzugsweise vor der Polymerisation in der Monomerlösung durchgeführt. Es kann aber auch das Polymergel neutralisiert oder nachneutralisiert werden. Hierzu wird das Gel typischerweise mechanisch zerkleinert, beispielsweise mittels eines Fleischwolfes und das Neutralisationsmittel wird aufgesprüht, übergestreut oder aufgegossen, und dann sorgfältig untergemischt. Dazu kann die erhaltene Gelmasse noch mehrmals zur Homogenisierung gewolft werden.

Die neutralisierte Gelmasse wird mit einem Band- oder Walzentrockner getrocknet bis der Restfeuchtegehalt vorzugsweise unter 10 Gew.-%, insbesondere unter 5 Gew.-% liegt. Das getrocknete Hydrogel wird hiernach gemahlen und gesiebt, wobei zur Mahlung üblicherweise Walzenstühle, Stiftmühlen oder Schwingmühlen eingesetzt werden können. Typischerweise weisen die Partikel eine Korngröße von 100 bis 1000 $\mu$m auf. Vorzugzweise haben mindestens 80 Gew.-%, bevorzugt mindestens 90 Gew.-%, besonders bevorzugt mindestens 95 Gew.-%, der Partikel eine Korngröße von 150 bis 600 $\mu$m, vorzugsweise 150 bis 500 $\mu$m.

Der CRC-Wert [g/g] des Grundpolymers A kann nach den in der Beschreibung angegebenen Methoden gemessen werden und ist bevorzugt mindestens 27, insbesondere mindestens 29, besonders bevorzugt mindestens 31, und höchstens 39, bevorzugt höchstens 35.

Der AUL-0,3psi-Wert [g/g] des Grundpolymers A kann nach den in der Beschreibung angegebenen Methoden gemessen werden und ist bevorzugt mindestens 14, insbesondere mindestens 17, besonders bevorzugt mindestens 21, und höchstens 27, bevorzugt höchstens 23.

Die nachvernetzten wasserabsorbierenden Polymere weisen üblicherweise eine Korngröße von 100 bis 1000 $\mu$m auf. Vorzugzweise haben mindestens 80 Gew.-%, bevorzugt mindestens 90 Gew.-%, besonders bevorzugt mindestens 95 Gew.-%, der Partikel eine Korngröße von 150 bis 600 $\mu$m, vorzugsweise 150 bis 500 $\mu$m.

Der CRC-Wert [g/g] der nachvernetzten wasserabsorbierenden Polymere kann nach den in der Beschreibung angegebenen Methoden gemessen werden und ist bevorzugt mindestens 20, insbesondere mindestens 24, besonders bevorzugt mindestens 25, insbesondere mindestens 26, insbesondere bevorzugt mindestens 30.

Der AUL-0,7psi-Wert [g/g] der nachvernetzten wasserabsorbierenden Polymere kann nach den in der Beschreibung angegebenen Methoden gemessen werden und ist bevorzugt mindestens 15, insbesondere mindestens 21, besonders bevorzugt mindestens 22, insbesondere mindestens 23, insbesondere bevorzugt mindestens 25.

Der SFC-Wert [$cm^3s/g$] der nachvernetzten wasserabsorbierenden Polymere kann nach den in der Beschreibung angegebenen Methoden gemessen werden und ist bevorzugt mindestens 80, insbesondere mindestens 100, besonders bevorzugt mindestens 120, insbesondere mindestens 130, insbesondere bevorzugt mindestens 135.

Zur Bestimmung der Güte der Nachvernetzung wird das getrocknete Hydrogel mit den Testmethoden geprüft, die nachfolgend beschrieben sind:

Methoden:

Die Messungen sollten, wenn nicht anders angegeben, bei einer Umgebungstemperatur von 23 ± 2 °C und einer relativen Luftfeuchte von 50 ± 10 % durchgeführt werden. Das Quellbare hydrogelbildende Polymer wird vor der Messung gut durchmischt.

<u>Zentrifugenretentionskapazität (CRC Centrifuge Retention Capacity)</u>

Bei dieser Methode wird die freie Quellbarkeit des Hydrogels im Teebeutel bestimmt. Zur Bestimmung der CRC werden 0,2000 ± 0,0050 g getrocknetes Hydrogel (Kornfraktion 106 - 850 $\mu$m) in einem 60 x 85 mm großen Teebeutel eingewogen, der anschließend verschweißt wird. Der Teebeutel wird für 30 Minuten in einen Überschuss von 0,9 gew.-%iger Kochsalzlösung gegeben (mindestens 0,83 l Kochsalzlösung/1 g Polymerpulver). Anschließend wird der Teebeutel 3 Minuten lang bei 250 G zentrifugiert. Die Bestimmung der vom Hydrogel festgehaltenen Flüssigkeitsmenge geschieht durch Auswägen des zentrifugierten Teebeutels.

Die Zentrifugenretentionskapazität kann auch nach der von der EDANA (European Disposables and Nonwovens Association) empfohlenen Testmethode Nr. 441.2-02 "Centrifuge retention capacity" bestimmt werden.

<u>Absorption unter Druck (AUL Absorbency Under Load) 0,7 psi (4830 Pa)</u>

Die Messzelle zur Bestimmung der AUL 0,7 psi ist ein Plexiglas-Zylinder mit einem Innendurchmesser von 60 mm und einer Höhe von 50 mm, der an der Unterseite einen angeklebten Edelstahl-Siebboden mit einer Maschenweite von 36 $\mu$m besitzt. Zu der Messzelle gehört weiterhin eine Plastikplatte mit einem Durchmesser von 59 mm und ein

Gewicht, welches zusammen mit der Plastikplatte in die Messzelle hineingestellt werden kann. Das Gewicht der Plastikplatte und das Gewicht betragen zusammen 1344 g. Zur Durchführung der Bestimmung der AUL 0,7 psi wird das Gewicht des leeren Plexiglas-Zylinders und der Plastikplatte ermittelt und als $W_0$ notiert. Dann werden 0,900 ± 0,005 g quellbares hydrogelbildendes Polymer (Korngrößenverteilung 150 - 800 μm) in den Plexiglas-Zylinder eingewogen und möglichst gleichmäßig auf dem Edelstahl-Siebboden verteilt. Anschließend wird die Plastikplatte vorsichtig in den Plexiglas-Zylinder hineingelegt und die gesamte Einheit gewogen; das Gewicht wird als $W_a$ notiert. Nun wird das Gewicht auf die Plastikplatte in dem Plexiglas-Zylinder gestellt. In die Mitte der Petrischale mit einem Durchmesser von 200 mm und einer Höhe von 30 mm wird eine keramische Filterplatte mit einem Durchmesser von 120 mm, einer Höhe von 10 mm und einer Porosität 0 gelegt und soviel 0,9 gew.-%ige Natriumchloridlösung eingefüllt, dass die Flüssigkeitsoberfläche mit der Filterplattenoberfläche abschließt, ohne dass die Oberfläche der Filterplatte benetzt wird. Anschließend wird ein rundes Filterpapier mit einem Durchmesser von 90 mm und einer Porengröße < 20 μm (S&S 589 Schwarzband von Schleicher & Schüll) auf die keramische Platte gelegt. Der quellbares hydrogelbildendes Polymer enthaltende Plexiglas-Zylinder wird mit Plastikplatte und Gewicht nun auf das Filterpapier gestellt und dort für 60 Minuten belassen. Nach dieser Zeit wird die komplette Einheit aus der Petrischale vom Filterpapier herausgenommen und anschließend das Gewicht aus dem Plexiglas-Zylinder entfernt. Der gequollenes Hydrogel enthaltende Plexiglas-Zylinder wird zusammen mit der Plastikplatte ausgewogen und das Gewicht als $W_b$ notiert.

Die Absorption unter Druck (AUL) wird wie folgt berechnet:

$$\text{AUL } 0{,}7 \text{ psi [g/g]} = [W_b - W_a]/[W_a - W_0]$$

Die Absorption unter Druck kann auch nach der von der EDANA (European Disposables and Nonwovens Association) empfohlenen Testmethode Nr. 442.2-02 "Absorption under pressure" bestimmt werden.

Absorption unter Druck (AUL Absorbency Under Load) 0,3 psi (2070 Pa)

Die Messung wird analog der AUL 0.3 psi durchgeführt. Das Gewicht der Plastikplatte und das Gewicht betragen zusammen 576 g.

Flüssigkeitsweiterleitung SFC Saline Flow Conductivity)

Die Flüssigkeitsweiterleitung einer gequollenen Gelschicht unter Druckbelastung von 0,3 psi (2070 Pa) wird, wie in EP-A-0 640 330 beschrieben, als Gel-Layer-Permeability einer gequollenen Gelschicht aus superabsorbierendem Polymer bestimmt, wobei die in zuvor genannter Patentanmeldung auf Seite 19 und in Figur 8 beschriebene Apparatur dahingehend modifiziert wurde, dass die Glasfritte (40) nicht mehr verwendet wird, der Stempel (39) aus gleichem Kunststoffmaterial besteht wie der Zylinder (37) und jetzt über die gesamte Auflagefläche gleichmäßig verteilt 21 gleichgroße Bohrungen enthält. Die Vorgehensweise sowie Auswertung der Messung bleibt unverändert gegenüber EP-A-0 640 330. Der Durchfluss wird automatisch erfasst.

Die Flüssigkeitsweiterleitung (SFC) wird wie folgt berechnet:

$$\text{SFC [cm}^3\text{s/g]} = (F_g(t{=}0) x L_0)/(d x A x WP),$$

wobei $F_g(t{=}0)$ der Durchfluss an NaCl-Lösung in g/s ist, der anhand einer linearen Regressionsanalyse der Daten $F_g(t)$ der Durchflussbestimmungen durch Extrapolation gegen t=0 erhalten wird, $L_0$ die Dicke der Gelschicht in cm, d die Dichte der NaCl-Lösung in g/cm$^3$, A die Fläche der Gelschicht in cm$^2$ und WP der hydrostatische Druck über der Gelschicht in dyn/cm$^2$ darstellt.

Fließgeschwindigkeit (FLR Flow Rate)

Bei der Methode wird die Geschwindigkeit ermittelt, mit der das quellbare hydrogelbildende Polymer durch einen Trichter fließt. Zur Bestimmung der FLR werden 100 ± 0,01 g getrocknetes Hydrogel in einen verschließbaren Metalltrichter eingewogen. Das Gewicht des quellbaren hydrogelbildenden Polymeren wird als $W_1$ notiert. Der Trichter entspricht DIN 53492. Das Auslaufrohr des Trichters hat eine Höhe von 145,0 ± 0,5 mm und einen Innendurchmesser von 10,00 ± 0,01 mm. Der Neigungswinkel der Trichterwand gegenüber der Horizontalen beträgt 20°. Der Metalltrichter wird geerdet. Anschließend wird der Trichter geöffnet und die Zeit gemessen bis der Trichter entleert ist. Die Zeit wird als t notiert.

Die Messung wird doppelt durchgeführt. Die Abweichung beider Messwerte darf maximal 5% betragen.

Die Fließgeschwindigkeit (FLR) wird wie folgt berechnet:

$$FLR\ [g/s] = W_1/t$$

Die Fließgeschwindigkeit kann auch nach der von der EDANA (European Disposables and Nonwovens Association) empfohlenen Testmethode Nr. 450.2-02 "Flowrate" bestimmt werden.

Ausschüttgewicht (ASG)

Bei der Methode wird die Dichte des quellbaren hydrogelbildenden Polymeren nach dem Ausschütten ermittelt. Die Messung wird mit einem zylindrischen Pygnometer entsprechend DIN 53466 durchgeführt. Das Pygnometer hat ein Volumen von 100,0 ± 0,5 ml, einen Innendurchmesser von 45,0 ± 0,1 mm und eine Höhe von 63,1 ± 0,1 mm. Das Pygnometer wird leer gewogen. Das Gewicht wird als $W_1$ notiert. Zur Bestimmung des ASG werden ca. 100 g getrocknetes Hydrogel in einen verschließbaren Metalltrichter eingewogen. Der Trichter entspricht DIN 53492. Das Auslaufrohr des Trichters hat eine Höhe von 145,0 ± 0,5 mm und einen Innendurchmesser von 10,00 ± 0,01 mm. Der Neigungswinkel der Trichterwand gegenüber der Horizontalen beträgt 20°. Der Metalltrichter und das Pygnometer werden geerdet. Anschließend wird der Trichter in das Pynometer entleert, wobei überschüssiges quellbares hydrogelbildendes Polymer überläuft. Das überstehende quellbare hydrogelbildende Polymer wird mittels eines Spatels abgestrichen. Das gefüllte Pygnometer wird gewogen und das Gewicht als $W_2$ notiert.

Die Messung wird doppelt durchgeführt. Die Abweichung beider Messwerte darf maximal 5% betragen.

Das Ausschüttgewicht (ASG) wird wie folgt berechnet:

$$ASG\ [g/cm^3] = [W_2 - W_1]/V$$

Das Ausschüttgewicht kann auch nach der von der EDANA (European Disposables and Nonwovens Association) empfohlenen Testmethode Nr. 460.2-02 "Density" bestimmt werden.

Oberflächenspannung des wässrigen Extraktes

Es werden 0,50 g hydrogelbildendes Polymer in ein kleines Becherglas eingewogen und mit 40 ml einer 0,9 gew.%-igen Kochsalzlösung versetzt. Der Inhalt des Becherglases wird 3 Minuten bei 500 U/m mit einem Magnetrührstab gerührt, dann lässt man 2 Minuten absitzen. Schliesslich wird die Oberflächenspannung der überstehenden wässrigen Phase mit einem Digital-Tensiometer K10-ST oder einem vergleichbaren Gerät mit Platinplatte gemessen (Fa. Kruess).

Korngrößenverteilung

Die Korngrößenverteilung kann nach der von der EDANA (European Disposables and Nonwovens Association) empfohlenen Testmethode Nr. 420.2-02 "Particle Size Distribution - Sieve Fractionation" bestimmt werden. Es wird lediglich zusätzlich ein 500 µm Sieb benötigt.

Alternativ kann eine photographische Methode verwendet werden, die zuvor gegen einen Siebstandard kalibriert wurde.

Extrahierbare 16h

Der Gehalt an extrahierbaren Bestandteilen des hydrogelbildenden Polymeren kann nach der von der EDANA (European Disposables and Nonwovens Association) empfohlenen Testmethode Nr. 470.2-02 "Determination of extractable polymer content by potentiometric titration" bestimmt werden.

pH-Wert

Der pH-Wert des des hydrogelbildenden Polymeren kann nach der von der EDANA (European Disposables and Nonwovens Association) empfohlenen Testmethode Nr. 400.2-02 "Determination of pH" bestimmt werden.

Free Swell Rate (FSR)

Zur Bestimmung der Quellgeschwindigkeit werden 1,00 g (= W1) des trockenen hydrogelbildenden Polymeren

in ein 25 ml Becherglas eingewogen und gleichmässig auf dessen Boden verteilt. Dann werden 20 ml einer 0,9 gew.%-igen Kochsalzlösung mittels eines Dispensers in ein zweites Becherglas dosiert und der Inhalt dieses Glases wird dem ersten zügig hinzugefügt und eine Stopuhr gestartet. Sobald der letzte Tropfen Salzlösung absorbiert wurde, was man am Verschwinden der Reflexion auf der Flüssigkeitsoberfläche erkennt, wird die Stopuhr angehalten. Die genaue Flüssigkeitsmenge, die aus dem zweiten Becherglas ausgegossen und durch das Polymer im ersten Becherglas absorbiert wurde, wird durch Rückwägung des zweiten Becherglases genau bestimmt (=W2). Die für die Absorption benötigte Zeitspanne, die mit der Stopuhr gemessen wurde, wird als t bezeichnet.

Daraus errechnet sich die Quellgeschwindigkeit (FSR) wie folgt:

$$FSR\ [g/gs] = W2/(W1xt)$$

Wenn der Feuchtegehalt des hydrogelbildenden Polymeren jedoch mehr als 3 Gew.-% beträgt, so ist das Gewicht W1 um diesen Feuchtegehalt zu korrigieren.

Beispiele

Beispiel 1:

Ein Grundpolymer wurde gemäß dem in der WO-A-01/38402 beschriebenen kontinuierlichen Kneterverfahren hergestellt. Dazu wurde Acrylsäure mit Natronlauge kontinuierlich neutralisiert und mit Wasser verdünnt, so dass der Neutralisationsgrad der Acrylsäure 73 Mol-% und der Feststoffgehalt (= Natriumacrylat und Acrylsäure) dieser Lösung ca. 37,3 Gew.-% betrug. Als Vernetzer wurde Polyethylenglykol-400-diacrylat in einer Menge von 1,00 Gew.-% bezogen auf Acrylsäuremonomer eingesetzt und der Vernetzer wurde dem Monomerstrom kontinuierlich zugemischt. Die Initiation erfolgte ebenfalls durch kontinuierliche Zumischung wässriger Lösungen der Initiatoren Natriumpersulfat, Wasserstoffperoxid und Ascorbinsäure.

Das Polymer wurde auf einem Bandtrockner getrocknet, gemahlen und dann auf eine Korngröße von 150 bis 500 µm abgesiebt.

Das so hergestellte Grundpolymer wies folgende Eigenschaften auf:

CRC = 32,8 g/g
AUL 0.3 psi = 21,3 g/g
FLR = 10,6 g/s
ASG = 0,67 g/cm$^3$
Extrahierbare (16 h) = 9,2 Gew.-%
pH = 6.1

Partikelgrößenverteilung

> 600 µm < 0,1 Gew.-%
> 500 µm = 2 Gew.-%
> 150 µm = 96,7 Gew.-%
> 45 µm = 1,1 Gew.-%
< 45 µm < 0,1 Gew.-%

In einer Pilotanlage wurde dieses Grundpolymer mit den beiden Oberflächennachvernetzungslösungen besprüht und anschliessend getempert. Das Aufsprühen erfolgte in einem Mischer Schuggi®-Flexomix Type 100 D mit gravimetrischer Eindosierung des Grundpolymers und kontinuierlicher Massenfluss-kontrollierter Flüssigkeitsdosierung über Zweistoffdüsen. Es wurden dabei zwei getrennte Düsen im Flexomix installiert, und jede der beiden Lösungen wurde getrennt ihrer Düse zugeführt.

Die Nachvernetzungslösung B enthielt 5,0 Gew.-% 2-Oxazolidinon, 23,6 Gew.-% Isopropanol, 5,0 Gew.-% 1,2-Propandiol, und 66,4 Gew.-% Wasser und wurde in einer Dosierung von 2,42 Gew.-% bezogen auf Polymer über eine separate Zweistoffdüse aufgesprüht.

Die Nachvernetzungslösung C enthielt 23,0 Gew.-% Aluminiumsulfat in Wasser und wurde in einer Dosierung von 1,08 Gew.-% bezogen auf Polymer über eine ZweistoffDüse aufgesprüht.

Das feuchte Polymer wurde direkt aus dem Schuggi-Mischer fallend in einen Reaktionstrockner NARA NPD

1.6 W (GMF Gouda B.V., Nl) überführt. Die Durchsatzrate an Grundpolymer A betrug 60 kg/h (trocken) und die Produkttemperatur des mit Dampf beheizten Trockners am Trocknerausgang betrug ca. 178°C. Dem Trockner war ein Kühler nachgeschaltet, der das Produkt rasch auf ca. 50°C abkühlte. Die genaue Verweilzeit im Trockner kann durch die Durchsatzrate des Polymers durch den Trockner sowie die Wehrhöhe (hier 70%) exakt vorgegeben werden.

Das erhaltene Endprodukt wies folgende Eigenschaften auf:

CRC = 25,6 g/g
AUL 0.7 psi = 22,8 g/g
SFC =137 x $10^{-7}$ $cm^3s/g$
FSR = 0,29 g/gs

Partikelgrößenverteilung

> 600 μm = 0,6 Gew.%
> 500 μm = 3,0 Gew.-%
> 400 μm = 31,3 Gew.-%
> 300 μm = 33,4 Gew.-%
> 150 μm = 30,3 Gew.-%
> 106 μm = 1,3 Gew.-%
< 106 μm < 0,1 Gew.-%

Beispiel 2:

Ein Grundpolymer wurde gemäß dem in der WO 01/38402 beschriebenen kontinuierlichen Kneterverfahren in einem List ORP 250 Technikumsreaktor hergestellt. Dazu wurde Acrylsäure mit Natronlauge kontinuierlich neutralisiert und mit Wasser verdünnt, so dass der Neutralisationsgrad der Acrylsäure 72 Mol-% und der Feststoffgehalt (= Natriumacrylat und Acrylsäure) dieser Lösung ca. 38,8 Gew.-% betrug. Als Vernetzer wurde Trimethylolpropan-18 EO-Triacrylat in einer Menge von 1,10 Gew.-% bezogen auf Acrylsäuremonomer eingesetzt und der Vernetzer wurde dem Monomerstrom kontinuierlich zugemischt. Die Initiation erfolgte ebenfalls durch kontinuierliche Zumischung wässriger Lösungen der Initiatoren Natriumpersulfat, Wasserstoffperoxid und Ascorbinsäure. Die Initiatormengen, bezogen auf Acrylsäure, betrugen 0,145 Gew.-% Natriumpersulfat, 0,0009 Gew.-% Wasserstoffperoxid und 0,003 Gew.-% Ascorbinsäure.

Das Polymer wurde auf einem Bandtrockner getrocknet, gemahlen und dann auf eine Korngröße von 150 bis 500 μm abgesiebt.

Das so hergestellte Grundpolymer wies folgende Eigenschaften auf:

CRC = 33,5 g/g
AUL 0.3 psi = 15,4 g/g
Extrahierbare (16 h) =10,0 Gew.-%
pH = 6.0

Partikelgrößenverteilung

> 600 μm = 0,1 Gew.-%
> 500 μm = 4,7 Gew.-%
> 150 μm = 92,1 Gew.-%
> 45 μm = 2,9 Gew.-%
< 45 μm = 0,2 Gew.-%

In einer Pilotanlage wurde dieses Grundpolymer mit den beiden Oberflächennachvernetzungslösungen besprüht und anschliessend getempert. Das Aufsprühen erfolgte in einem Mischer Schuggi®-Flexomix Type 100 D mit gravimetrischer Eindosierung des Grundpolymers und kontinuierlicher Massenfluss-kontrollierter Flüssigkeitsdosierung über Zweistoffdüsen. Es wurden dabei zwei getrennte Düsen im Flexomix installiert, und jede der beiden Lösungen wurde getrennt ihrer Düse zugeführt.

Die Nachvernetzungslösung B enthielt 2,5 Gew.-% 2-Oxazolidinon, 28,15 Gew.-% Isopropanol, 2,5 Gew.-% 1,2-Propandiol, 0,7 Gew.% Sorbitanmonococoate, und 66,15 Gew.-% Wasser und wurde in einer Dosierung von 3,5 Gew.-% bezogen auf das Polymer über eine separate Zweistoffdüse aufgesprüht.

Die Nachvernetzungslösung C enthielt 26,8 Gew.-% Aluminiumsulfat in Wasser und wurde in einer Dosierung von 1,6 Gew.% bezogen auf Polymer über eine Zweistoff-Düse aufgesprüht.

Das feuchte Polymer wurde direkt aus dem Schuggi-Mischer fallend in einen Reaktionstrockner NARA NPD 1.6 W (Fa. Gouda, Niederlande) überführt. Die Durchsatzrate Grundpolymer betrug 60 kg/h (trocken) und die Produkttemperatur des mit Dampf beheizten Trockners am Trocknerausgang betrug ca. 179°C. Dem Trockner war ein Kühler nachgeschaltet, der das Produkt rasch auf ca. 50°C abkühlte. Die genaue Verweilzeit im Trockner kann durch die Durchsatzrate des Polymers durch den Trockner sowie die Wehrhöhe (hier 70%) exakt vorgegeben werden.

Das erhaltene Endprodukt besitzt folgende Eigenschaften:

CRC = 26,1 g/g
AUL 0.7 psi = 23,2 g/g
SFC = $120x10^{-7}$ $cm^3s/g$
FLR = 11,2 g/s
ASG = 0,70 $g/cm^3$

Partikelgrößenverteilung

> 600 μm = 0,1 Gew.-%
> 500 μm = 2,0 Gew.-%
> 300 μm = 65,3 Gew.-%
> 1 50 μm = 28,4 Gew.-%
< 150,um = 4,2 Gew.-%

Beispiel 3 (Vergleichsbeispiel):

Der Versuch aus Beispiel 1 wurde wiederholt, jedoch wurden die beiden Lösungen zur Oberflächennachvernetzung vor dem Aufdüsen zusammen-gemischt. Kurze Zeit nach Beginn der Oberflächennachvernetzung in der Pilotanlage kam es zu einer vollständigen Blockade des Schuggi-Mischers und der Versuch musste abgebrochen werden.

Beispiel 4 (Vergleichsbeispiel):

Der Versuch aus Beispiel 2 wurde wiederholt, jedoch wurden die beiden Lösungen zur Oberflächennachvernetzung vor dem Aufdüsen in einem separaten Tank zusammen-gemischt. Kurze Zeit nach Beginn der Oberflächennachvernetzung in der Pilotanlage kam es zu einer schnell fortschreitenden Verstopfung des Schuggi-Mischers und der Versuch musste abgebrochen werden.

## Patentansprüche

1. Verfahren zur Herstellung wasserabsorbierender Polymere, wobei ein Grundpolymer A mit einer ersten wässrigen Lösung B mindestens eines Oberflächennachvernetzers und einer zweiten wässrigen Lösung C mindestens eines polyvalenten Kations vermischt und thermisch behandelt wird, **dadurch gekennzeichnet, dass** das Grundpolymer A auf Basis zu mindestens 50% neutralisierter Säuregruppen tragender Monomere hergestellt wird und die Lösungen B und C über getrennte Düsen zumindest teilweise gleichzeitig dosiert werden, wobei die Konzentration des mindestens einen Oberflächennachvernetzers auf dem Grundpolymer A von 0,01 bis 0,25 Gew.-% und die Konzentration des mindestens einen polyvalenten Kations auf dem Grundpolymer A von 0,001 bis 0,5 Gew.-% beträgt, jeweils bezogen auf das Grundpolymer A.

2. Verfahren gemäß Anspruch 1, **dadurch gekennzeichnet, dass** die Lösungen B und C über getrennte Düsen gleichzeitig dosiert werden.

3. Verfahren gemäß einem der Anspruch 1 oder 2, **dadurch gekennzeichnet, dass** die Lösung B ein Cosolvens enthält.

4. Verfahren gemäß einem der Ansprüche 1 bis 3, **dadurch gekennzeichnet, dass** die Lösung B des Oberflächennachvernetzers ein Oxazolidon enthält.

5. Verfahren gemäß einem der Ansprüche 1 bis 4, **dadurch gekennzeichnet, dass** die Lösung B mindestens zwei voneinander verschiedene Oberflächennachvernetzer enthält.

6. Verfahren gemäß einem der Ansprüche 1 bis 5, **dadurch gekennzeichnet, dass** die Lösung B mindestens einen Oberflächennachvernetzer, der kein Polyol ist, und mindestens ein Polyol enthält.

7. Verfahren gemäß einem der Ansprüche 1 bis 6, **dadurch gekennzeichnet, dass** man dem Grundpolymer A ein Deagglomerationshilfsmittels zusetzt.

8. Verfahren gemäß Anspruch 7, **dadurch gekennzeichnet, dass** das Deagglomerationshilfsmittel Sorbitanmonococoat und/oder Sorbitanmonolaurat ist.

9. Verfahren gemäß Anspruch 7 oder 8, **dadurch gekennzeichnet, dass** man das Deagglomerationshilfsmittel einer der beiden wässrigen Lösungen B oder C zusetzt.

10. Verfahren gemäß einem der Ansprüche 7 bis 9, **dadurch gekennzeichnet, dass** man das Deagglomerationshilfsmittel so dosiert, dass die Oberflächenspannung eines wässrigen Extrakts des gequollenen wasserabsorbierenden Polymers nach Zusatz des Deagglomerationshilfsmittels mindestens 0,065 N/m beträgt.

11. Verfahren gemäß einem der Ansprüche 1 bis 10, **dadurch gekennzeichnet, dass** die Konzentration des mindestens einen Oberflächennachvernetzers in der Lösung B, bezogen auf die Lösung B, höchstens 30 Gew.-% beträgt.

12. Verfahren gemäß einem der Ansprüche 1 bis 11, **dadurch gekennzeichnet, dass** die Konzentration des mindestens einen Oberflächennachvernetzers auf dem Grundpolymer A, bezogen auf das Grundpolymer A, von 0,1 Gew.-% bis 0,25 Gew.-% beträgt.

13. Verfahren gemäß einem der Ansprüche 1 bis 12, **dadurch gekennzeichnet, dass** die Konzentration des mindestens einen polyvalenten Kations in der Lösung C, bezogen auf die Lösung C, höchstens 12 Gew.-% beträgt.

14. Verfahren gemäß einem der Ansprüche 1 bis 13, **dadurch gekennzeichnet, dass** die Konzentration des mindestens einen polyvalenten Kations auf dem Grundpolymer A, bezogen auf das Grundpolymer A, von 0,005 Gew.-% bis 0,2 Gew.-% beträgt.

15. Verfahren gemäß einem der Ansprüche 1 bis 14, **dadurch gekennzeichnet, dass** die Konzentration des mindestens einen polyvalenten Kations auf dem Grundpolymer A, bezogen auf das Grundpolymer A, von 0,02 Gew.-% bis 0,1 Gew.-% beträgt.

16. Verfahren gemäß einem der Ansprüche 1 bis 15, **dadurch gekennzeichnet, dass** das Verhältnis von Lösung B zu Lösung C von 10:1 bis 1:10 beträgt.

17. Verfahren gemäß einem der Ansprüche 1 bis 16, **dadurch gekennzeichnet, dass** die Gesamtmenge der Lösungen B und C zwischen 2,5 bis 6,5 Gew.-%, bezogen auf Grundpolymer A, beträgt.

18. Verfahren gemäß einem der Ansprüche 1 bis 17, **dadurch gekennzeichnet, dass** das Grundpolymer A eine teilneutralisierte, vernetzte Polyacrylsäure ist.

19. Verfahren gemäß einem der Ansprüche 1 bis 18, **dadurch gekennzeichnet, dass** das Grundpolymer A einen pH-Wert zwischen 5,6 und 6,2 aufweist.

20. Verfahren gemäß einem der Ansprüche 1 bis 19, **dadurch gekennzeichnet, dass** die Lösungen B und C auf das Grundpolymer A aufgesprüht werden und der mittlere Tropfendurchmesser der versprühten Tropfen zwischen 50 und 100 $\mu$m beträgt.

## Claims

1. A process for producing a water-absorbing polymer, which comprises a base polymer A being mixed with a first aqueous solution B of at least one surface postcrosslinker and a second aqueous solution C of at least one polyvalent cation and thermally treated, wherein said base polymer A is based on at least 50% neutralized acid-functional monomer and said solutions B and C are metered wholly or partly concurrently through separate nozzles, the concentration of the at least one surface postcrosslinker on said base polymer A being in the range from 0.01% to 0.25% by weight and the concentration of the at least one polyvalent cation on said base polymer A being in the range from 0.001% to 0.5% by weight, all based on said base polymer A.

2. The process of claim 1 wherein said solutions B and C are metered concurrently through separate nozzles.

3. The process of claim 1 or claim 2 wherein said solution B comprises a cosolvent.

4. The process of any of claims 1 to 3 wherein said solution B of said surface postcrosslinker comprises an oxazolidone.

5. The process of any of claims 1 to 4 wherein said solution B comprises at least two mutually distinct surface postcrosslinkers.

6. The process of any of claims 1 to 5 wherein said solution B comprises at least one surface postcrosslinker which is not a polyol and at least one polyol.

7. The process of any of claims 1 to 6 wherein said base polymer A has a deagglomerating assistant added to it.

8. The process of claim 7 wherein said deagglomerating assistant is sorbitan monococoate and/or sorbitan monolaurate.

9. The process of claim 7 or 8 wherein said deagglomerating assistant is added to said aqueous solution B or to said aqueous solution C.

10. The process of any of claims 7 to 9 wherein the deagglomerating assistant is metered such that the surface tension of an aqueous extract of the swollen water-absorbing polymer after addition of said deagglomerating assistant is at least 0.065 N/m.

11. The process of any of claims 1 to 10 wherein the concentration of the at least one surface postcrosslinker in said solution B, based on said solution B, is not more than 30% by weight.

12. The process of any of claims 1 to 11 wherein the concentration of the at least one surface postcrosslinker on said base polymer A, based on said base polymer A, is in the range from 0.1% by weight to 0.25% by weight.

13. The process of any of claims 1 to 12 wherein the concentration of the at least one polyvalent cation in said solution C, based on said solution C, is not more than 12% by weight.

14. The process of any of claims 1 to 13 wherein the concentration of the at least one polyvalent cation on said base polymer A, based on said base polymer A, is in the range from 0.005% by weight to 0.2% by weight.

15. The process of any of claims 1 to 14 wherein the concentration of the at least one polyvalent cation on said base polymer A, based on said base polymer A, is in the range from 0.02% by weight to 0.1% by weight.

16. The process of any of claims 1 to 15 wherein the ratio of said solution B to said solution C is in the range from 10:1 to 1:10.

17. The process of any of claims 1 to 16 wherein the total amount of said solutions B and C is in the range from 2.5% to 6.5% by weight, based on said base polymer A.

18. The process of any of claims 1 to 17 wherein said base polymer A is a partially neutralized and crosslinked polyacrylic acid.

19. The process of any of claims 1 to 18 wherein said base polymer A has a pH in the range from 5.6 to 6.2.

**20.** The process of any of claims 1 to 19 wherein said solutions B and C are sprayed onto said base polymer A and the average diameter of the sprayed drops is in the range from 50 to 100 μm.

## Revendications

**1.** Procédé pour la préparation de polymères absorbant l'eau, où un polymère de base A est mélangé avec une première solution aqueuse B d'au moins un post-réticulant de surface et une deuxième solution aqueuse C d'au moins un cation polyvalent et est traité thermiquement, **caractérisé en ce que** le polymère de base A est préparé à base de monomères portant des groupes acides neutralisés à raison d'au moins 50% et les solutions B et C sont dosées via des pulvérisateurs séparés au moins partiellement en même temps, où la concentration dudit au moins un post-réticulant de surface sur le polymère de base A est de 0,01 à 0,25% en poids et la concentration dudit au moins un cation polyvalent sur le polymère de base A est de 0,001 à 0,5% en poids, à chaque fois par rapport au polymère de base A.

**2.** Procédé selon la revendication 1, **caractérisé en ce que** les solutions B et C sont dosées simultanément via des pulvérisateurs séparés.

**3.** Procédé selon l'une quelconque des revendications 1 ou 2, **caractérisé en ce que** la solution B contient un cosolvant.

**4.** Procédé selon l'une quelconque des revendications 1 à 3, **caractérisé en ce que** la solution B du post-réticulant de surface contient une oxazolidone.

**5.** Procédé selon l'une quelconque des revendications 1 à 4, **caractérisé en ce que** la solution B contient au moins deux post-réticulants de surface différents l'un de l'autre.

**6.** Procédé selon l'une quelconque des revendications 1 à 5, **caractérisé en ce que** la solution B contient au moins un post-réticulant de surface qui n'est pas un polyol et contient au moins un polyol.

**7.** Procédé selon l'une quelconque des revendications 1 à 6, **caractérisé en ce qu'**on ajoute un adjuvant de désagglomération au polymère de base A.

**8.** Procédé selon la revendication 7, **caractérisé en ce que** l'adjuvant de désagglomération est un monococoate de sorbitane et/ou un monolaurate de sorbitane.

**9.** Procédé selon la revendication 7 ou 8, **caractérisé en ce qu'**on ajoute l'agent de désagglomération à une des deux solutions aqueuses B ou C.

**10.** Procédé selon l'une quelconque des revendications 7 à 9, **caractérisé en ce qu'**on dose l'adjuvant de désagglomération de manière telle que la tension superficielle d'un extrait aqueux du polymère absorbant l'eau gonflé après l'addition de l'adjuvant de désagglomération est d'au moins 0,065 N/m.

**11.** Procédé selon l'une quelconque des revendications 1 à 10, **caractérisé en ce que** la concentration dudit au moins un post-réticulant de surface dans la solution B, par rapport à la solution B, est d'au plus 30% en poids.

**12.** Procédé selon l'une quelconque des revendications 1 à 11, **caractérisé en ce que** la concentration dudit au moins un post-réticulant de surface sur le polymère de base A, par rapport au polymère de base A, est de 0,1% en poids à 0,25% en poids.

**13.** Procédé selon l'une quelconque des revendications 1 à 12, **caractérisé en ce que** la concentration dudit au moins un cation polyvalent dans la solution C, par rapport à la solution C, est d'au plus 12% en poids.

**14.** Procédé selon l'une quelconque des revendications 1 à 13, **caractérisé en ce que** la concentration dudit au moins un cation polyvalent sur le polymère de base A, par rapport au polymère de base A, est de 0,005% en poids à 0,2% en poids.

**15.** Procédé selon l'une quelconque des revendications 1 à 14, **caractérisé en ce que** la concentration dudit au moins un cation polyvalent sur le polymère de base A, par rapport au polymère de base A, est de 0,02% en poids à 0,1%

en poids.

16. Procédé selon l'une quelconque des revendications 1 à 15, **caractérisé en ce que** le rapport de la solution B à la solution C est de 10:1 à 1:10.

17. Procédé selon l'une quelconque des revendications 1 à 16, **caractérisé en ce que** la quantité totale des solutions B et C est située entre 2,5 à 6,5% en poids, par rapport au polymère de base A.

18. Procédé selon l'une quelconque des revendications 1 à 17, **caractérisé en ce que** le polymère de base A est un poly(acide acrylique) partiellement neutralisé, réticulé.

19. Procédé selon l'une quelconque des revendications 1 à 18, **caractérisé en ce que** le polymère de base A présente un pH entre 5,6 et 6,2.

20. Procédé selon l'une quelconque des revendications 1 à 19, **caractérisé en ce que** les solutions B et C sont pulvérisées sur le polymère de base A et le diamètre moyen des gouttes pulvérisées est situé entre 50 et 100 $\mu$m.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 0083022 A
- EP 0543303 A
- EP 0530438 A
- US 4666983 A
- US 5385983 A
- DE 198075022 A
- WO 03031482 A
- DE 198545732 A
- DE 19854574 A
- DE 19807992 A
- US 6239230 B
- EP 0372981 A
- EP 1165631 A
- EP 1169372 A
- WO 0220068 A
- WO 0222717 A
- DE 19846412 A
- US 4286082 A
- DE 2706135 C
- US 4340706 A
- DE 3713601 C
- DE 2840010 C
- DE 4344548 A
- DE 4020780 A
- DE 4015085 A
- DE 3917846 A
- DE 3807289 A
- DE 3533337 A
- DE 3503458 A
- DE 4244548 A
- DE 4219607 A
- DE 4021847 A
- DE 3831261 A
- DE 3511086 A
- DE 3118172 A
- DE 3028043 A
- DE 4418881 A
- EP 0801483 A
- EP 0455985 A
- EP 0467073 A
- EP 0312952 A
- EP 0205874 A
- EP 0499774 A
- DE 2612846 A
- EP 0205674 A
- US 5145906 A
- EP 0670073 A
- US 4057521 A
- US 4062817 A
- US 4525527 A
- US 4295987 A
- US 5011892 A
- US 4076663 A
- US 4931497 A
- US 5041496 A
- EP 0343427 A
- WO 0138402 A
- EP 0955086 A
- DE 1301566 A
- EP 0640330 A


### In der Beschreibung aufgeführte Nicht-Patentliteratur


- **F.L. BUCHHOLZ ; A.T. GRAHAM.** Modern Superabsorbent Polymer Technology. Wiley-VCH, 1998, 77-84
- *Makromol. Chem.,* 1947, vol. 1, 169